# DEMANDE DE BREVET EUROPEEN

(11) **EP 4 170 920 A1**
(43) Date de publication de la demande: **26.04.2023**
(21) Numéro de dépôt: 22199581.4
(22) Date de dépôt: 04.10.2022
(51) Int. Cl.: H04B 7/06, H04B 7/08, H04B 7/204, H04L 5/00

(54) **MÉTHODE DE FORMATION ET D'ALLOCATION DE FAISCEAUX PAR SOUS-BANDES FRÉQUENTIELLES POUR UNE ANTENNE SATELLITE MULTIFAISCEAUX ACTIVE**

(30) Priorité: 21.10.2021 FR 2111165
(71) Demandeur: THALES, 92400 Courbevoie (FR)
(72) Inventeur: LEGAY, Hervé, 31830 PLAISANCE DU TOUCH (FR); VIDAL, Florian, 31000 TOULOUSE (FR); FRAYSSE, Jean-Philippe, 31200 TOULOUSE (FR)
(74) Mandataire: Atout PI Laplace

(57) **Abrégé**

Méthode d'allocation de ressources dans un système de télécommunications par satellite à antenne multifaisceaux active fonctionnant dans une bande de fréquence donnée et pour une zone de couverture donnée dans laquelle sont situés une pluralité de terminaux utilisateurs, la méthode comprenant les étapes de :
- Décomposer (501) la bande de fréquence en sous-bandes telles que, dans chaque sous-bande, les faisceaux formés par l'antenne sont stables pour l'ensemble des fréquences de la sous-bande,
- Déterminer (502), pour chaque sous-bande, une grille de faisceaux orthogonaux permettant de couvrir une partie de la zone de couverture,
- Définir plusieurs sous-ensembles de terminaux utilisateurs et allouer (503) à chaque sous-ensemble, l'une des grilles de faisceaux orthogonaux et une direction de pointage de cette grille de sorte que chaque faisceau de la grille pointe vers au moins un des terminaux utilisateurs du sous-ensemble.

## Description

L'invention concerne le domaine des antennes actives multifaisceaux large bande en particulier pour des charges utiles flexibles de télécommunications spatiales à haut débit, dans lesquelles les ports de ces antennes multifaisceaux sont connectées à un processeur numérique.

L'invention porte plus précisément sur une méthode de formation de faisceaux par sous-bandes fréquentielles permettant de maximiser l'efficacité spectrale d'une antenne active associée à une zone de couverture dans laquelle sont situés un ensemble d'utilisateurs.

L'invention porte également sur une méthode d'allocation des faisceaux et sous-bandes à un ensemble de terminaux utilisateurs situés dans une zone de couverture donnée

Les antennes multifaisceaux sont de la famille des antennes réseaux actives, ou des antennes réseaux actives magnifiées par un système optique, à base de réflecteurs ou de lentilles. Elles sont caractérisées par le fait qu'un grand nombre d'éléments rayonnants contribue à chaque faisceau, et que réciproquement chaque élément rayonnant contribue à un grand nombre de faisceaux. Cette architecture antennaire permet alors d'allouer de façon flexible la puissance de l'amplificateur associé à chaque élément rayonnant sur l'ensemble de la zone géographique couverte par les faisceaux auxquels il contribue.

Le processeur numérique réalise un traitement numérique des signaux. Il est usuellement utilisé pour réaliser un routage et une canalisation flexible des signaux entre les ports des différents faisceaux de réception et d'émission, intégrant des techniques d'accès multiple en fréquence ou dans le temps. Il permet également, et plus spécifiquement pour ces architectures antennes réseau fonctionnant à la réception (respectivement émission), de combiner (respectivement diviser) les signaux des ports éléments rayonnants réception (respectivement émission) avec une pondération reconfigurable, réalisant ainsi un étage de formation numérique de faisceaux. Le processeur numérique permet ainsi de former plusieurs faisceaux en direction de différents utilisateurs.

L'allocation spatiale d'une même ressource fréquentielle à plusieurs utilisateurs associés à des directions différentes permet d'accroitre le débit de la charge utile d'un facteur qui est au premier ordre égal au nombre de fois que la ressource fréquentielle est réutilisée. Elle induit toutefois des risques d'interférences entre ces utilisateurs. La minimisation de ces interférences nécessite que chaque utilisateur soit incident dans le lobe principal du faisceau qui lui est dédié, tout en étant incident dans les lobes secondaires de faibles niveaux, et même préférentiellement dans les zéros des autres faisceaux dédiés aux autres utilisateurs pour lesquelles la même ressource fréquentielle a été allouée. En transmission sur le lien aller du satellite vers les utilisateurs, si le gain antenne réalisé par le faisceau dédié à chaque utilisateur est Ci, et si les gains réalisés par ce faisceau en direction de l'utilisateur j (avec *j* ≠ *i*) sont l*ⱼ*, il est alors nécessaire de maximiser pour chaque utilisateur i : Cᵢ /∑lⱼ.

Maximiser le rapport Cᵢ /∑lⱼ pour chaque utilisateur permet d'améliorer l'efficacité spectrale de la liaison utilisateur, c'est-à-dire le nombre de bits qu'il est possible de transmettre dans la liaison par unité de bande de fréquence.

Pour minimiser ces interférences, chaque faisceau peut être reconfiguré en modifiant la pondération de la formation de faisceaux, pour présenter des faibles niveaux de rayonnement en direction des autres utilisateurs utilisant la même ressource fréquentielle, tout en maintenant un fort gain en direction de chaque utilisateur. La reconfiguration de ces faisceaux, qui permet de réaliser des atténuations de rayonnement, et même des zéros en direction des utilisateurs interférents tout en présentant un gain antenne en direction de chaque utilisateur n'est cependant possible que si les utilisateurs sont spatialement séparés d'une distance correspondant à la largeur angulaire d'un faisceau. Plus précisément, pour respecter cette contrainte, il faut, par exemple, que les utilisateurs soient séparés d'une distance supérieure à la demi-largeur angulaire à -12 dB d'un faisceau, ce qui correspond approximativement à la largeur angulaire à -3 dB d'un faisceau.

Afin de maximiser le débit d'une antenne multifaisceaux, il est donc nécessaire de respecter les contraintes antagonistes suivantes pour l'allocation d'une même ressource fréquentielle à des différents utilisateurs :
- Les utilisateurs doivent être suffisamment distants pour ne pas être captés dans le même lobe d'un faisceau (problème d'interférences entre utilisateurs),
- La ressource doit être réaffectée à des utilisateurs suffisamment proches pour pouvoir être réutilisée le plus grand nombre de fois (problème d'optimisation du débit).

Il existe donc un besoin pour une méthode permettant de réutiliser la ressource le plus grand nombre de fois tout en permettant une minimisation des interférences co-canal par des techniques de filtrage spatial.

Un problème à résoudre consiste à maximiser le débit en réalisant des couvertures optimales de faisceaux et à adapter ces couvertures multifaisceaux au trafic, i.e. à la distribution spatiale des utilisateurs.

Un autre problème à résoudre consiste à pallier à la dispersion fréquentielle de la formation de faisceaux. La largeur d'un faisceau réalisé par une antenne réseau ou une antenne réseau imagée par un réflecteur évolue en fonction de la fréquence. Il en est de même de la position des lobes secondaires et des zéros de rayonnements. Il en résulte que pour une pondération donnée, le signal interférent est capté à des niveaux de gain qui peuvent varier dans la bande de fréquence. Il est donc difficile de maintenir une forte atténuation en direction des utilisateurs interférents.

Il existe donc également un besoin pour une méthode d'allocation de ressources fréquentielles permettant de minimiser les interférences co-canal.

Une méthode de référence pour réallouer la ressource tant en minimisant les interférences est de diviser la bande disponible en quatre et de répartir ces sous-bandes dans des cellules selon un schéma à quatre couleurs, de sorte qu'aucune cellule adjacente ne partage la même sous-bande. Cette méthode est simple, largement utilisée, et bien adaptée pour les antennes passives multifaisceaux qui ne sont pas reconfigurables. Elle n'est toutefois pas optimale. Dans chaque cellule, il n'est pas possible d'allouer plus d'un quart de la bande totale de l'antenne. Comme certaines zones peuvent manquer de bande et d'autres en avoir un surplus, il n'est donc pas possible de traiter des scénarios de trafic non uniforme avec cette technique.

Une variante de cette méthode de référence consiste à moduler la taille des faisceaux et la bande passante allouée à ces faisceaux pour introduire une flexibilité dans l'allocation des ressources fréquentielles, afin de s'adapter à la dispersion spatiale du trafic. La coloration de plan de fréquence est un problème NP-difficile et leur résolution repose sur des heuristiques. Ces techniques visent à réduire les interférences, mais n'intègre pas d'algorithmes d'annulation d'interférences.

Une autre méthode connue dite de pré-codage ou « precoding » en anglais, développée pour les réseaux de télécommunication terrestres vise à améliorer l'efficacité spectrale des liaisons et de réduire les interférences co-canal. La technique consiste à caractériser la matrice H représentant le canal de propagation des différents faisceaux de l'antenne en direction des différents utilisateurs.

Cette matrice H caractérise pour chaque faisceau le gain en direction de l'utilisateur sur lequel le faisceau est dirigé, ainsi que les isolations réalisées en direction des utilisateurs interférents. Une matrice de pré-codage W est alors calculée, qui vise à supprimer ou réduire ces interférences. Elle permet de rendre la matrice HW diagonale.

La méthode de pré-codage est aussi appliquée pour les réseaux de télécommunications spatiaux, par exemple dans la référence [1]. L'objectif est essentiellement d'accroitre le taux de réutilisation des ressources fréquentielles par rapport au scénario de réutilisation de fréquence à 4 couleurs.

La matrice de canal H peut être évaluée au moyen d'une détection de séquences pilotes par chaque terminal utilisateur de sorte à discriminer les signaux provenant de différents faisceaux. Lorsque le nombre de faisceaux s'accroit, cette méthode présente l'inconvénient d'une forte complexité. La forme d'onde du signal utilise une trame dans laquelle ces séquences pilote sont inclues en nombre limité.

Il est alors nécessaire de regrouper les utilisateurs proches, et de calculer la matrice de pré-codage commune à ces utilisateurs (voir par exemple référence [2]). Les performances résultantes se dégradent lorsque les utilisateurs regroupés pour l'évaluation de cette matrice de canal sont trop éloignés.

La matrice de pré-codage W est préférentiellement calculée avec une méthode de minimisation de l'erreur quadratique ou MMSE (Minimum Mean Square Error). Cette méthode permet de pondérer l'annulation des signaux utiles grâce à un coefficient de régulation a.

La technique basée sur l'évaluation de ces matrices de canal H par le terminal utilisateur présente donc de fortes limitations lorsqu'elle est appliquée aux antennes multifaisceaux pour applications spatiales.

Une autre approche consiste alors à construire ces matrices, grâce aux informations de position des utilisateurs fournies par d'autres dispositifs, et à la connaissance des diagrammes de rayonnement des différents faisceaux, par simulation ou par mesure.

Une solution proposée dans la publication [3] consiste à affecter des ressources temporelles ou fréquentielles différentes aux terminaux utilisateurs proches. Une distance minimale en dessous de laquelle deux utilisateurs ne peuvent pas partager une même ressource est définie.

Pour chaque sous-ensemble d'utilisateurs auxquels une même ressource a été affectée, des faisceaux sont sélectionnés parmi un ensemble de faisceaux préformés. Ils sont dirigés en direction des différents utilisateurs. Cette technique a été évaluée positivement en termes de performances et de complexité. Elle fait l'économie d'un traitement algorithmique, de type MMSE, pour minimiser les interférences des utilisateurs auxquels une même ressource temporelle a été affectée.

Cependant cette méthode présente deux inconvénients. Tout d'abord, elle n'est pas optimale en termes d'efficacité spectrale et elle ne prend pas en compte les phénomènes de dispersion fréquentielle de l'antenne.

La dispersion fréquentielle des diagrammes de rayonnement d'une antenne réseau reconfigurable est également une caractéristique bien connue. Elle est d'autant plus importante que la taille de l'antenne est grande, et que le secteur angulaire est important. Elle provient du fait qu'il est pratique de reconfigurer le diagramme d'une antenne réseau au moyen d'un formateur de faisceaux utilisant une pondération de phase pour combiner de façon cohérente les contributions des différents éléments rayonnants dans une direction donnée alors que le besoin réel est une pondération en retard. Il résulte de cette simplification un dépointage du faisceau en fréquence, qui est d'autant plus important que l'angle de dépointage est grand.

Il est possible de réaliser des pondérations en retard, autant pour les formateurs de faisceaux analogiques que pour les formateurs de faisceaux numériques. Cette solution permet de résoudre en partie le problème d'erreur réalisée lorsque les éléments rayonnants sont pilotés par des pondérations de phase.

Cependant, la complexité de ces formateurs dit « true time delay » ou TTD est plus importante. Par ailleurs, même avec une formation de faisceaux à base de retards, les lobes secondaires du diagramme d'antenne deviennent dispersifs en fréquence.

Il en résulte que même en présence d'une formation de faisceau à base de retards, il n'est pas possible de maintenir sur une large bande de fréquence, un diagramme stable pour lequel les zéros entre les lobes sont formés en direction d'utilisateurs interférents. Le rapport C/l moyenné sur la bande totale est donc susceptible de se dégrader, d'autant plus que le secteur angulaire est important ou que l'antenne est grande.

L'invention vise notamment à pallier aux limitations de la méthode décrite dans [3] en prenant en compte la dispersion en fréquence des diagrammes d'antenne formés et en améliorant l'efficacité spectrale globale pour l'ensemble des utilisateurs d'une zone.

L'invention a pour objet une méthode d'allocation de ressources dans un système de télécommunications par satellite à antenne multifaisceaux active fonctionnant dans une bande de fréquence donnée et pour une zone de couverture donnée dans laquelle sont situés une pluralité de terminaux utilisateurs, la méthode comprenant les étapes de :
- Décomposer la bande de fréquence en sous-bandes telles que, dans chaque sous-bande, les faisceaux formés par l'antenne sont stables pour l'ensemble des fréquences de la sous-bande,
- Déterminer, pour chaque sous-bande, une grille de faisceaux orthogonaux permettant de couvrir une partie de la zone de couverture,
- Définir plusieurs sous-ensembles de terminaux utilisateurs et allouer à chaque sous-ensemble, l'une des grilles de faisceaux orthogonaux et une direction de pointage de cette grille de sorte que chaque faisceau de la grille pointe vers au moins un des terminaux utilisateurs du sous-ensemble.

Selon un aspect particulier de l'invention, une grille de faisceaux orthogonaux est déterminée de manière que les maxima locaux de gain d'un faisceau sont positionnés sensiblement sur les minima locaux de gain des faisceaux qui lui sont adjacents.

Selon un aspect particulier de l'invention, l'allocation à chaque sous-ensemble d'une grille de faisceaux orthogonaux et une direction de pointage est réalisée de sorte que chaque terminal utilisateur soit situé à une distance vis-à-vis du centre d'un faisceau inférieure à un dixième de la largeur du faisceau mesurée à 3dB.

Selon un aspect particulier de l'invention, l'étape d'allocation est réalisée au moyen des sous-étapes suivantes, pour chaque grille de faisceaux orthogonaux,
- Déterminer un sous-ensemble de terminaux utilisateurs et une direction de pointage de la grille tels que tous les terminaux utilisateurs du sous-ensemble sont positionnés à une distance du centre d'un faisceau inférieure à une distance maximum prédéterminée,
- Allouer aux terminaux utilisateurs des ressources fréquentielles dans la sous-bande de fréquences associée à la grille.

Dans une variante de réalisation, la méthode comprend en outre l'étape de, lorsque des terminaux utilisateurs de la zone de couverture ne sont pas sélectionnés à l'issue de l'étape d'allocation, réduire la taille des sous-bandes fréquentielles et exécuter à nouveau l'étape d'allocation.

Selon un aspect particulier de l'invention, la largeur d'une sous-bande fréquentielle Δf est au maximum égale à Δf < a. f₀ * λ / (L. sin θ), avec f₀ est la fréquence centrale de la sous-bande, L la plus grande longueur de l'antenne, θ l'angle maximal de la couverture multifaisceaux.

L'invention a aussi pour objet une Charge utile de satellite comprenant un réseau antennaire, un dispositif d'allocation de fréquences par sous-bandes et un dispositif de formation de faisceaux configurés pour conjointement mettre en œuvre la méthode d'allocation de ressources selon l'invention.

D'autres caractéristiques et avantages de la présente invention apparaîtront mieux à la lecture de la description qui suit en relation aux dessins annexés suivants.
[Fig. 1] représente un diagramme d'antenne illustrant une grille de faisceaux orthogonaux,
[Fig. 2] illustre des résultats d'étude d'efficacité spectrale obtenue pour différentes configurations de grilles de faisceaux,
[Fig. 3] illustre plusieurs grilles de faisceaux orthogonaux définies pour différentes sous-bandes fréquentielles,
[Fig. 4] illustre la superposition de plusieurs grilles de faisceaux orthogonaux avec et sans orientation,
[Fig. 5] schématise sur un organigramme les étapes de la méthode d'allocation de ressources selon un mode de réalisation de l'invention,
[Fig. 6] schématise sur un organigramme un exemple de réalisation de l'étape d'association de grilles de faisceaux à des groupes d'utilisateurs,
[Fig. 7] représente un schéma d'un exemple de charge utile d'un satellite multi-faisceaux configuré pour mettre en œuvre l'invention,
[Fig. 8] représente un premier mode de réalisation d'un formateur de faisceaux configuré pour mettre en œuvre l'invention,
[Fig. 9] représente un second mode de réalisation d'un formateur de faisceaux configuré pour mettre en œuvre l'invention.

L'invention propose de réaliser plusieurs grilles de faisceaux préformés orthogonaux. Autrement dit, les faisceaux sont séparés entre eux de sorte que les maxima locaux de gain d'un faisceau sont positionnés au niveau des minima locaux de gain des faisceaux adjacents. De cette manière, on minimise l'interférence entre faisceaux adjacents tout en maximisant le nombre de faisceaux dans une zone de couverture donnée.

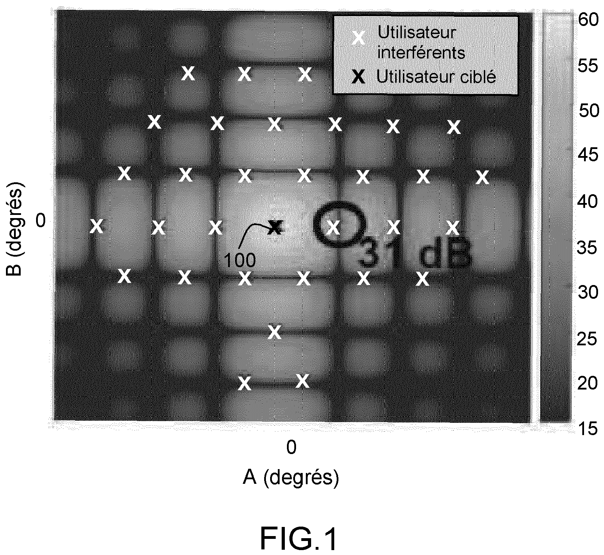

La figure 1 représente schématiquement un diagramme d'antenne d'un faisceau dont le centre est identifié par une croix et la référence 100. Les autres croix sur la figure 1 schématisent les positions des centres des diagrammes d'antenne des autres faisceaux d'une grille de faisceaux orthogonaux. Les centres des autres faisceaux sont positionnés sur les minima du faisceau illustré à la figure 1. Ces minima se situent entre le lobe principal du faisceau et les lobes secondaires adjacents ou entre différents lobes secondaires.

Il apparait que pour une telle grille de faisceaux, l'efficacité spectrale obtenue en associant chaque faisceau à un terminal utilisateur (qui correspond à chaque croix de la figure 1) est similaire à celle qui serait obtenue avec une méthode de pré-codage selon l'art antérieur. Un tel traitement ne présente alors plus d'intérêt et il est possible de s'affranchir de son implémentation complexe.

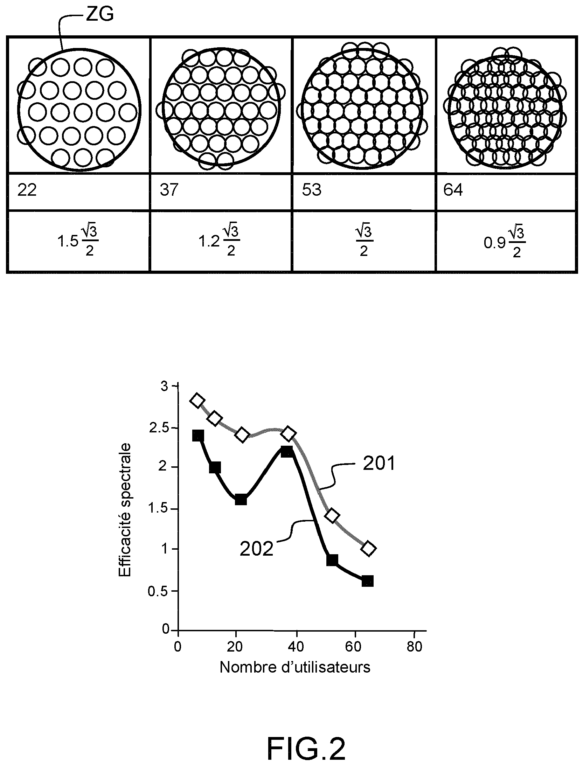

Cette propriété intéressante est mise en évidence dans l'étude paramétrique illustrée à la figure 2 qui consiste à déterminer un nombre de faisceaux optimal pour couvrir une zone géographique donnée ZG.

Sur la gauche de la figure 2 on a représenté quatre configurations différentes de grilles de faisceaux pour une même zone géographique ZG. Les quatre configurations correspondent respectivement à des nombres de faisceaux égaux à 22,37,53 et 64.

Le diagramme sur la droite de la figure 2 représente l'efficacité spectrale obtenue (en bits/s/Hz) pour différents nombres de faisceaux, avec précodage (courbe 201) ou sans précodage (courbe 202). On suppose que chaque faisceau pointe vers un terminal utilisateur exactement situé dans la direction du centre du lobe principal du faisceau.

On peut voir sur ce diagramme que la courbe sans précodage 202 s'approche au plus de la courbe avec précodage 201 pour un nombre de faisceaux préformés égal à 37 ce qui correspond à une grille de faisceaux orthogonaux entre eux.

Au contraire, pour un nombre de faisceaux égal à 22, les maxima des faisceaux sont positionnés sur les premiers lobes secondaires des autres faisceaux. Dans cette configuration, le rapport signal à interférence C/l et l'efficacité spectrale sont dégradés.

Pour la configuration à 22 faisceaux, les techniques de pré-codage permettent d'améliorer l'efficacité spectrale, au prix d'un traitement complémentaire. La pondération adaptative permet de réaliser des zéros en direction des interférences co-canal sans dégrader le gain vers les utilisateurs.

Pour la configuration à 53 ou 64 faisceaux, les faisceaux sont fortement entrelacés, et le pré-codage n'apporte que peu d'amélioration. Il n'est pas possible de réaliser des zéros sans préserver le gain vers les utilisateurs.

Ainsi, la couverture d'une zone géographique en faisceaux multiples dont les maxima locaux (le lobe principal et les lobes secondaires) sont positionnés à l'emplacement des minima locaux des autres faisceaux permet d'obtenir des performances optimales sans nécessité d'implémenter des traitements adaptatifs de type précodage qui sont complexes à réaliser.

L'invention propose par ailleurs de définir des grilles de faisceaux orthogonaux différentes pour chaque sous-bande de fréquence de manière à garantir que les faisceaux soient stables sur l'ensemble de la sous-bande considérée.

Pour cela, la bande totale de fréquence de l'antenne est décomposée en sous-bandes dont les largeurs sont fixées de manière à ce que les faisceaux soient stables dans chaque sous-bande, tant au niveau des lobes principaux que des lobes secondaires. La stabilité d'un faisceau est définie par une absence de variation du diagramme d'antenne (fonction de la direction angulaire de pointage) selon les fréquences. Autrement dit, on considère qu'un faisceau est stable sur une plage de fréquence donnée si la variation moyenne du gain d'antenne sur cette plage ne dépasse pas une valeur prédéterminée.

Cette décomposition en sous-bandes permet de tirer profit du caractère dispersif de l'antenne. La largeur des faisceaux variant en fréquence, et les minima locaux des faisceaux se déplaçant en fréquence, les grilles de faisceaux orthogonaux réalisées sont différentes dans chaque sous-bande de fréquence.

Le nombre de grilles de faisceaux est supérieur au nombre de sous-bandes pour lequel la dispersion fréquentielle de l'antenne est réduite et sans effet majeur sur les diagrammes de rayonnement. Cette dispersion fréquentielle s'accroit avec la dimension de l'antenne et l'angle de pointage du faisceau.

Selon un exemple de réalisation, les sous-bandes choisies ont une largeur Δf strictement inférieure à Δf < a. f₀ * λ / (L. sin θ), avec α un nombre préférentiellement choisi entre 0.3 et 0.5 selon que le critère de dispersion est appliqué de façon strict ou standard.

f₀ est la fréquence centrale de la sous-bande qui peut être approximée par la fréquence opérationnelle de l'antenne, c'est-à-dire la fréquence centrale de la bande totale de fréquence dans laquelle l'antenne est opérationnelle.

L est la plus grande longueur de l'antenne,
θ désigne l'angle maximal de la couverture multifaisceaux.
λ est la longueur d'onde
Ainsi, pour un exemple d'antenne ayant une plus grande longueur L égale à 240 λ pour un faisceau pointé à 8.5°, une fréquence opérationnelle de 20 GHz, la largeur d'une sous bande est de 170 MHz en application stricte ou 280 MHz en application standard, soit entre 11 et 17 sous-bandes pour une bande totale de 3 GHz comprise entre 18,5 GHz et 21,5 GHz.

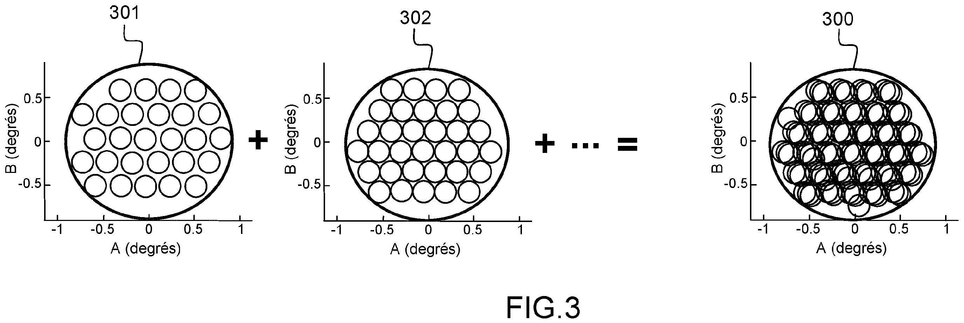

La figure 3 illustre, sur un exemple, plusieurs grilles de faisceaux orthogonaux 301,302 générées pour des sous-bandes de fréquence différentes ainsi que le résultat 300 de la superposition de ces différentes grilles pour l'ensemble des sous-bandes constituant la bande de fréquence de l'antenne.

Afin d'optimiser l'efficacité spectrale, les sous-bandes (et donc les grilles de faisceaux orthogonaux associées) sont allouées à des ensembles différents de terminaux utilisateurs de sorte que chaque faisceau pointe vers un terminal utilisateur différent.

Les grilles de faisceaux par sous-bande sont ajustables en direction de sorte à s'adapter au maximum à la distribution des terminaux utilisateurs dans une zone de couverture donnée. Ainsi, les grilles de faisceaux ont une capacité angulaire de dépointage et sont orientables de sorte à maximiser le gain en fonction des utilisateurs visés et de capter les utilisateurs interférents au niveau des minima locaux du faisceau. La capacité angulaire de dépointage d'une grille de faisceaux est, par exemple, inférieure à la distance entre deux faisceaux, prise à une valeur prédéterminée du maximum du faisceau, par exemple égale 3dB.

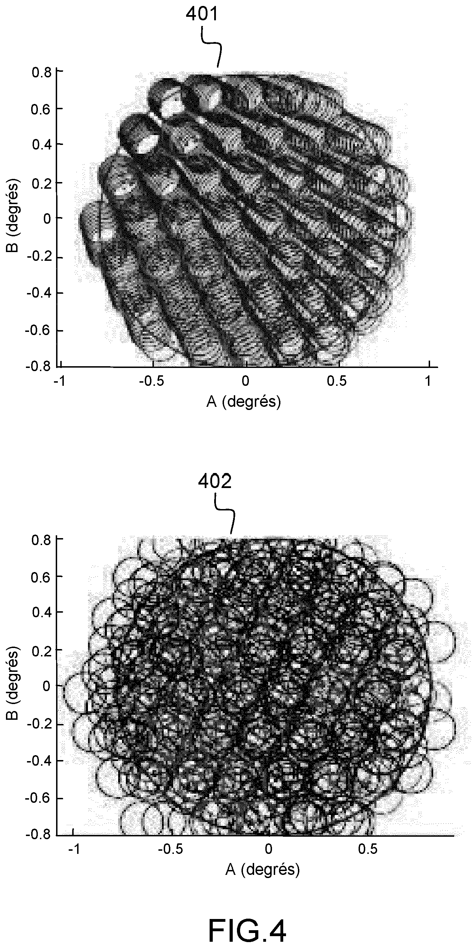

La figure 4 représente un exemple de superposition de grilles de faisceaux orthogonaux par sous-bande (401) et la même superposition après application d'une orientation particulière de chaque grille pour adapter la couverture aux positions des terminaux utilisateurs dans la zone de couverture (402).

Les faisceaux sont préférentiellement générés à partir d'une loi de distribution uniforme car une telle loi permet d'obtenir des faisceaux directifs. Dans une variante de réalisation, d'autres lois de synthèse de faisceau peuvent être choisies de sorte à faire varier la distance entre les minima locaux et les maxima locaux du diagramme d'antenne. Un avantage de cette variante est qu'elle permet de s'adapter plus finement aux distances entre terminaux utilisateurs.

A partir des grilles de faisceaux orthogonaux préformées pour chaque sous-bande de fréquences, un objectif de l'invention est d'allouer au mieux ces ressources à différents sous-ensembles d'utilisateurs.

Pour cela, l'invention propose une méthode d'allocation de ressources qui a pour but de définir des sous-ensembles de terminaux utilisateurs suffisamment distants les uns des autres, d'associer chaque sous-ensemble à une sous-bande de fréquences, d'appliquer un dépointage angulaire à la grille de faisceaux orthogonaux associée à la sous-bande sélectionnée pour que les faisceaux pointent en direction des différents utilisateurs.

La sensibilité de positionnement des terminaux utilisateurs vis-à-vis des centres des faisceaux est telle que chaque terminal peut être affecté à un faisceau dès lors que sa position respecte une loi normale d'écart type σ=Δ/10 autour de la direction de pointage correspondant au maximum du faisceau, avec Δ la largeur du faisceau dans la sous-bande considérée, préférentiellement mesurée à 3dB du maximum du lobe principal du faisceau. Avec cette tolérance, il est possible d'associer un faisceau à plusieurs terminaux utilisateurs dans la mesure où ils respectent tous cette condition de distance vis-à-vis du centre du faisceau.

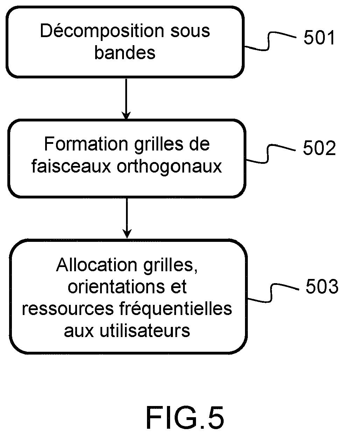

La figure 5 schématise sur un organigramme les étapes de mise en œuvre d'un procédé d'allocation de ressources selon un mode de réalisation de l'invention.

Le procédé vise à allouer, à un ensemble de terminaux utilisateurs situés dans une zone géographique de couverture, un ensemble correspondant de faisceaux préformés sous forme d'une grille de faisceaux orthogonaux, une direction de pointage de cette grille et une sous-bande de fréquences associée à cette grille.

A l'étape 501, on décompose la bande de fréquences totale de l'antenne satellite en sous-bandes dont les largeurs sont définies de manière à ce que les faisceaux formés soient stables pour toutes les fréquences d'une sous-bande. La largeur des sous-bandes est, par exemple, égale au maximum à Δf (voir définition précédemment introduite).

A l'étape 502, on définit, pour chaque sous-bande, une grille de faisceaux orthogonaux dont les faisceaux sont stables sur la largeur de la sous-bande.

A l'étape 503, on sélectionne des sous-ensembles de terminaux utilisateurs (à partir d'une cartographie décrivant les coordonnées des utilisateurs dans une zone de couverture). Dans chaque sous-ensemble défini, les utilisateurs sont distants entre eux d'une séparation angulaire (du point de vue du satellite) correspondant à la distance entre le maximum du lobe principal d'un faisceau et le minimum local entre le lobe principal et le premier lobe secondaire du faisceau. Une tolérance correspondant à une loi normale d'écart type σ=Δ/10 est considérée dans le calcul des distances entre utilisateurs tel qu'expliqué précédemment. On alloue à chaque sous-ensemble défini, une grille de faisceaux orthogonaux (associée à une sous-bande) et une orientation de pointage de cette grille pour la faire coïncider au mieux avec les positions des terminaux utilisateurs dans le sous-ensemble. Un objectif est que chaque terminal utilisateur soit situé proche du centre du lobe principal d'un des faisceaux de la grille avec une tolérance de σ=Δ/10. Ainsi, plusieurs terminaux utilisateurs peuvent être éclairés par le même faisceau dans la mesure où ils respectent ce critère de distance. Autrement dit, à l'issue de l'étape 503, chaque faisceau est associé à un groupe d'utilisateurs distants du centre d'une distance prédéterminée. Les différents utilisateurs éclairés par le même faisceau partage la même sous-bande de fréquence mais se voient allouer des porteuses fréquentielles différentes au sein de cette sous-bande. L'affectation des porteuses fréquentielles entre utilisateurs partageant une même sous-bande est réalisée de sorte à maximiser un critère de distance entre utilisateurs utilisant la même porteuse fréquentielle et ce afin de minimiser les interférences entre utilisateurs.

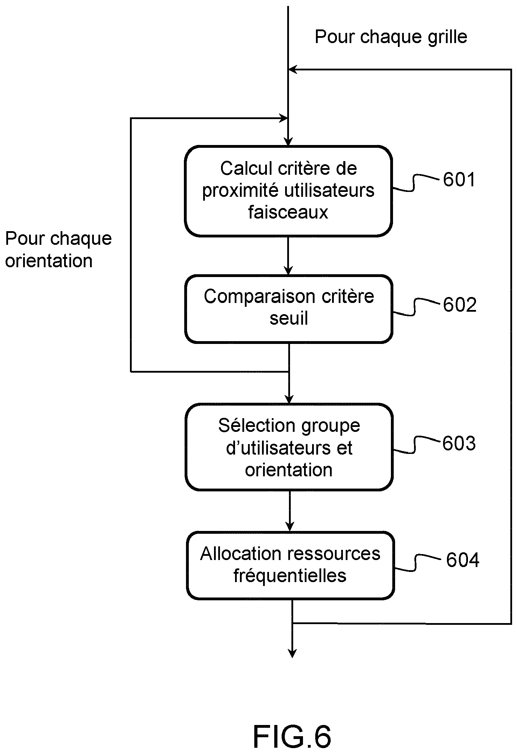

Selon un mode de réalisation particulier, l'étape 503 est réalisée au moyen de l'algorithme suivant schématisé à la figure 6.

L'algorithme prend en entrée une carte de l'ensemble des terminaux utilisateurs dans la zone de couverture et leur demande en bande de fréquence. Il prend aussi en entrée l'ensemble des grilles de faisceaux orthogonales déterminées à l'étape 502 avec les sous-bandes de fréquence associées définies à l'étape 501 ainsi qu'un ensemble d'orientations possibles de ces grilles. Les différentes orientations peuvent aussi être vues comme des positionnements des centres des faisceaux par rapport à un point de la zone. L'algorithme prend aussi en entrée un paramètre de distance maximum acceptable entre un utilisateur et le centre du faisceau qui lui est alloué. Cette distance maximum est, par exemple, définie à partir d'une tolérance correspondant à une loi normale d'écart type σ=Δ/10.

L'algorithme traite chaque grille de faisceaux orthogonaux de façon séquentielle, en recherchant, à chaque itération, un groupe de terminaux utilisateurs à associer à la grille de faisceaux courante ainsi qu'une orientation de cette grille.

Pour cela, pour chaque orientation possible de la grille de faisceaux courante, on calcule à l'étape 601 un critère de proximité entre utilisateurs et centres des faisceaux de la grille. Ce critère consiste à déterminer le nombre d'utilisateurs qui sont à une distance d'un centre d'un faisceau inférieure à la distance maximum acceptable.

A l'étape 602, on compare ce critère à un seuil initialisé à 0, si le critère dépasse le seuil, alors on met à jour l'orientation retenue avec l'orientation courante et le seuil avec le nombre d'utilisateurs calculé à l'étape 601.

Les étapes 601 et 602 sont itérées pour toutes les orientations possibles de la grille de faisceaux et on retient à la fin (étape 603) un ensemble de terminaux utilisateurs et une orientation de la grille de faisceaux qui sont tels que chaque terminal utilisateur de l'ensemble est situé à une distance du centre d'un faisceau de la grille qui est inférieure à la distance maximum acceptable avec un nombre de terminaux utilisateurs retenu qui est maximisé.

A l'étape 604, on détermine ensuite l'allocation des porteuses fréquentielles, au sein de la sous-bande déterminée, pour chaque utilisateur de l'ensemble déterminé à l'étape précédente 603 conformément à la demande de chaque utilisateur mais sans dépasser la capacité de la sous-bande de fréquences disponible. Cette étape 604 consiste notamment à allouer les porteuses aux différents utilisateurs en maximisant la distance entre utilisateurs affectés à la même porteuse.

Les étapes 601-604 sont itérées pour chaque grille de faisceaux orthogonaux en supprimant, à chaque nouvelle itération, les terminaux utilisateurs qui ont déjà été associés à des grilles de faisceaux, de la liste des terminaux utilisateurs à servir.

Dans une variante de réalisation, si des utilisateurs résiduels subsistent dans la zone de couverture après avoir alloué toutes les sous-bandes on exécute à nouveau l'algorithme d'allocation en réduisant la taille des sous-bandes et donc en augmentant le nombre de sous-bandes. Le nombre de sous-bandes est toutefois limité, car la largeur de la sous bande doit rester supérieure à la somme des largeurs des porteuses dédiées aux utilisateurs. S'il reste des utilisateurs non affectés uniquement dans un nombre limité de faisceaux, il est aussi possible de réduire la largeur des porteuses dans ce faisceau, afin que les différents utilisateurs se partagent la ressource fréquentielle tout en respectant une politique d'allocation dans laquelle les priorités sont définies par l'opérateur. Une autre option consiste à relâcher localement la contrainte de distance de certains utilisateurs vis-à-vis du centre du faisceau.

Des utilisateurs résiduels peuvent subsister dans deux cas. Dans un premier cas, dans certains faisceaux, la bande agrégée des porteuses associées aux utilisateurs sélectionnés dépasse la largeur des sous-bandes. Dans un second cas, les grilles de faisceaux sont orientées de sorte qu'elles ne permettent pas de couvrir certains utilisateurs trop éloignés du maximum d'un faisceau.

Les grilles de faisceaux sont orientées de sorte qu'elles ne permettent pas de couvrir certains utilisateurs, trop éloignés du maximum d'un faisceau

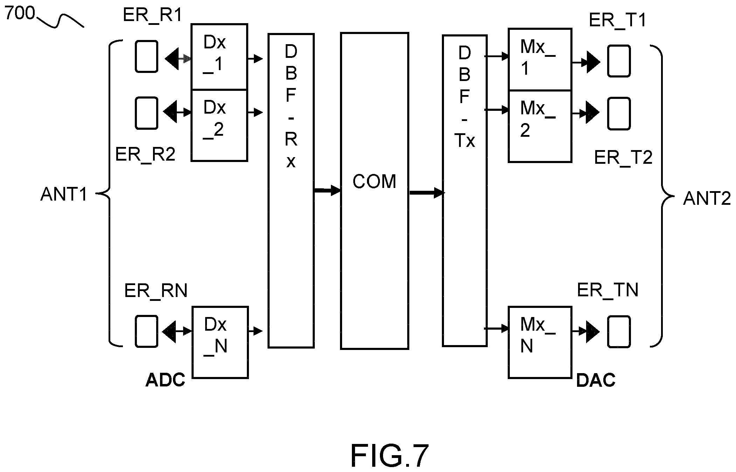

La figure 7 représente un schéma d'une charge utile 700 d'un satellite multifaisceaux adapté pour mettre en œuvre l'invention.

La charge utile 700 comporte une première antenne réseau ANT1 composée d'une pluralité d'éléments rayonnants ER_R1,ER_RN. Chaque élément rayonnant ER_R1 ,ER_RN est associée à une voie de réception comprenant un convertisseur analogique numérique ADC_1 ,ADC_N et un démultiplexeur Dx_1 ,Dx_N. Les démultiplexeurs de l'ensemble des voies de réception alimentent un réseau de formation de faisceaux numérique DBF_Rx. Un commutateur COM commute les signaux en sortie du formateur de faisceaux numérique DBF_Rx de la liaison montante vers les ports indexés en bande de fréquence et en position de faisceaux. Le commutateur COM a notamment pour fonction de séparer les porteuses fréquentielles allouées aux différents utilisateurs sur la voie montante, de les router et de les agréger pour construire les sous-bandes fréquentielles de la voie descendante. Plus généralement, le commutateur COM a notamment pour fonction de réaliser le mécanisme d'allocation de fréquences aux utilisateurs par sous-bande, chaque sous-bande étant associée à une grille de faisceaux.

Les signaux commutés en sortie du commutateur COM sont relayés vers un second réseau de formation de faisceaux numérique DBF_Tx pour la formation de faisceaux sur la liaison descendante. Les sorties du second formateur de faisceaux alimentent des chaines d'émission comportant chacune un multiplexeur Mx_1 ,Mx_N, un convertisseur numérique analogique DAC_1 ,DAC_N et un élément rayonnant ER_T1 ,ER_TN. Les éléments rayonnants forment ensemble une seconde antenne réseau ANT2 pour la voie descendante.

L'invention est principalement mise en œuvre au moyen des formateurs de faisceaux numérique DBF_Rx,DBF_Tx.

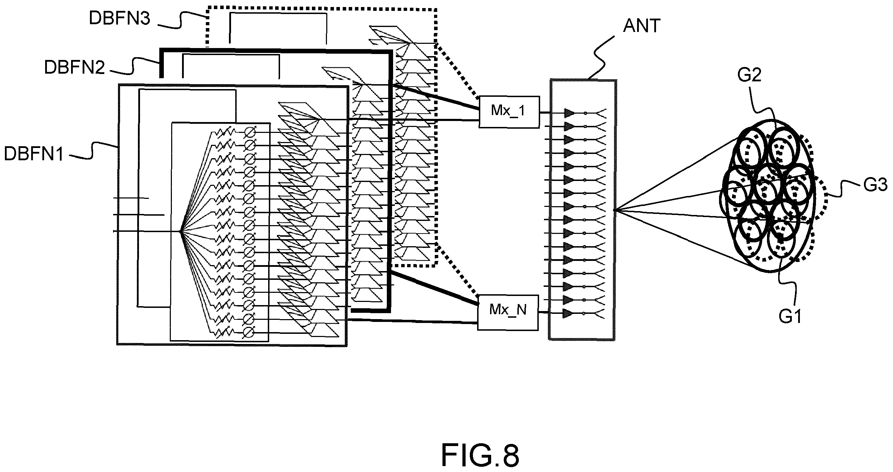

La figure 8 schématise le fonctionnement d'un formateur de faisceaux numériques DBFN pour former une grille de faisceaux orthogonaux selon un premier mode de réalisation de l'invention.

Les deux formateurs de faisceaux DBF_Rx,DBF_Tx fonctionnent de manière identique. La figure 8 illustre le fonctionnement pour un formateur de faisceau en voie descendante.

Le traitement numérique réalisé pour former une grille de faisceaux orthogonaux associée à une direction de pointage donnée est le même pour toutes les grilles de faisceaux choisies et toutes les directions de pointage.

La figure 8 représente schématiquement un réseau de formation de faisceaux numérique DBFN qui reçoit en entrée des signaux issus du commutateur COM sur plusieurs ports d'accès faisceaux. Les signaux reçus en entrée sont chacun divisés en autant de fois qu'il y a d'éléments rayonnants et chaque signal subi une pondération de phase et d'amplitude qui sont programmables selon la direction de pointage choisie.

Sur la figure 8, on a schématisé trois réseaux de formation de faisceaux numérique DBFN1,DBFN2,DBFN3 qui implémentent le même traitement numérique mais avec des lois de pondération en phase et amplitude différentes afin de former la même grille de faisceaux orthogonaux mais avec des directions de pointage différentes. Sur la droite de la figure 8 sont schématisées les trois grilles de faisceaux orientées selon trois directions différentes respectivement définies par les trois réseaux DBFN1 ,DBFN2,DBFN3.

Les signaux de sortie du formateur de faisceau numérique DBFN sont ensuite recombinés via un multiplexeur Mx_1 ,Mx_N sur chaque élément rayonnant du réseau antennaire ANT. Le nombre de ports faisceaux du formateur de faisceau numérique est inférieur au nombre de positions possibles dans la grille.

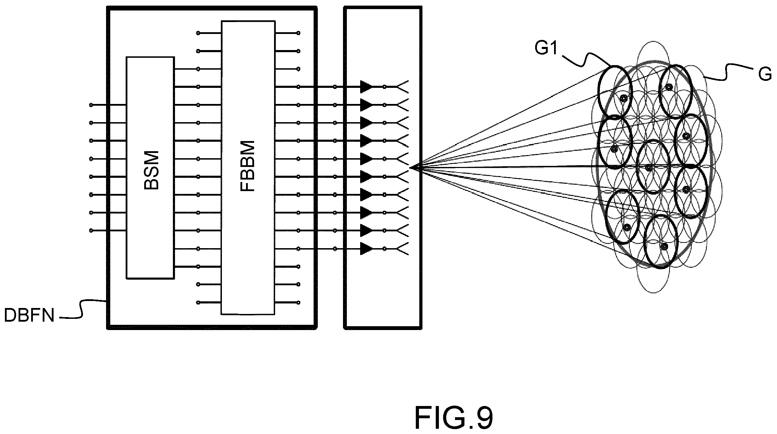

La figure 9 schématise le fonctionnement d'un formateur de faisceaux numériques DBFN pour former une grille de faisceaux orthogonaux selon un second mode de réalisation de l'invention.

Sur la figure 9, on a représenté les traitements nécessaires à la formation d'une seule grille de faisceaux, sachant que dans un cas réel, ces traitements sont dupliqués pour former plusieurs grilles de faisceaux. Aussi, les traitements sont représentés pour une antenne fonctionnant en émission.

Dans ce second mode de réalisation, le formateur DBFN comporte un premier étage constitué d'une matrice de sélection de faisceaux BSM et d'un second étage constitué d'une matrice de formation de faisceaux fixes.

Le second étage FBBM est configuré pour générer une grille initiale G de faisceaux fixe à partir de laquelle est ensuite générée chaque grille de faisceaux orthogonaux. Cette étape est réalisée par le premier étage de sélection d'une grille de faisceaux parmi l'ensemble des faisceaux de la grille initiale G fixe.

Sur la figure 9 on a représenté un exemple G1 de grille de faisceaux orthogonaux sélectionnée par la matrice de sélection de faisceaux BSM.

### Références

[1] B. Devilliers, A. Perez-Neira, and C. Mosquera, Joint Linear Precoding and Beamforming for the Forward Link of Multi-Beam Broadband Satellite Systems, IEEE Global Telecommunications Conference- GLOBECOM (2011).
[2] D. Christopoulos, S. Chatzinotas, G. Zheng, J. Grotz, and B. Ottersten, "Linear and nonlinear techniques for multibeam joint processing in satellite communications," EURASIP J. Wireless Commun.Netw., May 2012.
[3] P. Angeletti and R. De Gaudenzi, "A Pragmatic Approach to Massive MIMO for Broadband Telecommunication Satellites", IEEE Access, July 2020.

## Revendications

1. Méthode d'allocation de ressources dans un système de télécommunications par satellite à antenne multifaisceaux active fonctionnant dans une bande de fréquence donnée et pour une zone de couverture donnée dans laquelle sont situés une pluralité de terminaux utilisateurs, la méthode comprenant les étapes de :
- Décomposer (501) la bande de fréquence en sous-bandes telles que, dans chaque sous-bande, les faisceaux formés par l'antenne sont stables pour l'ensemble des fréquences de la sous-bande,
- Déterminer (502), pour chaque sous-bande, une grille de faisceaux orthogonaux permettant de couvrir une partie de la zone de couverture,
- Définir plusieurs sous-ensembles de terminaux utilisateurs et allouer (503) à chaque sous-ensemble, l'une des grilles de faisceaux orthogonaux et une direction de pointage de cette grille de sorte que chaque faisceau de la grille pointe vers au moins un des terminaux utilisateurs du sous-ensemble.

2. Méthode d'allocation de ressources selon la revendication 1 dans laquelle une grille de faisceaux orthogonaux est déterminée (502) de manière que les maxima locaux de gain d'un faisceau sont positionnés sensiblement sur les minima locaux de gain des faisceaux qui lui sont adjacents.

3. Méthode d'allocation de ressources selon l'une quelconque des revendications précédentes dans laquelle l'allocation (503) à chaque sous-ensemble d'une grille de faisceaux orthogonaux et une direction de pointage est réalisée de sorte que chaque terminal utilisateur soit situé à une distance vis-à-vis du centre d'un faisceau inférieure à un dixième de la largeur du faisceau mesurée à 3dB.

4. Méthode d'allocation de ressources selon l'une quelconque des revendications précédentes dans laquelle l'étape d'allocation (503) est réalisée au moyen des sous-étapes suivantes, pour chaque grille de faisceaux orthogonaux,
- Déterminer (601,602,603) un sous-ensemble de terminaux utilisateurs et une direction de pointage de la grille tels que tous les terminaux utilisateurs du sous-ensemble sont positionnés à une distance du centre d'un faisceau inférieure à une distance maximum prédéterminée,
- Allouer (604) aux terminaux utilisateurs des ressources fréquentielles dans la sous-bande de fréquences associée à la grille.

5. Méthode d'allocation de ressources selon la revendication 4 comprenant en outre l'étape de, lorsque des terminaux utilisateurs de la zone de couverture ne sont pas sélectionnés à l'issue de l'étape d'allocation (503), réduire la taille des sous-bandes fréquentielles et exécuter à nouveau l'étape d'allocation (503).

6. Méthode d'allocation de ressources selon l'une quelconque des revendications précédentes dans laquelle la largeur d'une sous-bande fréquentielle Δf est au maximum égale à Δf *< α.f₀.λ*/*(L.sinθ)* , avec f₀ est la fréquence centrale de la sous-bande, L la plus grande longueur de l'antenne, θ l'angle maximal de la couverture multifaisceaux.

7. Charge utile de satellite comprenant un réseau antennaire (ANT1 ,ANT2), un dispositif d'allocation de fréquences par sous-bandes (COM) et un dispositif de formation de faisceaux (DBF_TX,DBF_RX) configurés pour conjointement mettre en œuvre la méthode d'allocation de ressources selon l'une quelconque des revendications précédentes.
